(19) Europäisches Patentamt
European Patent Office
Office européen des brevets

(11) **EP 4 516 740 A1**

(12) **EUROPEAN PATENT APPLICATION**

(43) Date of publication:
**05.03.2025 Bulletin 2025/10**

(21) Application number: **23195046.0**

(22) Date of filing: **04.09.2023**

(51) International Patent Classification (IPC):
***C01C 1/04*** *(2006.01)*

(52) Cooperative Patent Classification (CPC):
**C01C 1/0482**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Topsoe A/S**
**2800 Kgs. Lyngby (DK)**

(72) Inventors:
• **Sørensen, Per Aggerholm**
**2800 Kgs. Lyngby (DK)**
• **Møllerhøj, Martin**
**2800 Kgs. Lyngby (DK)**

• **Knudsen, Lari Bjerg**
**2800 Kgs. Lyngby (DK)**
• **Speth, Christian Henrik**
**2800 Kgs. Lyngby (DK)**
• **Glover, Frances Helena Mary**
**Woking, GU21 6DN (GB)**
• **Shaw, Andrew**
**Sunbury on Thames, TW16 6HJ (GB)**
• **White, Vincent**
**Ashtead, Surrey, KT21 1SE (GB)**
• **Mineweaser, Jason A.**
**Quakertown, PA 18951 (US)**

(74) Representative: **Topsoe A/S**
**Haldor Topsøes Allé 1**
**2800 Kgs. Lyngby (DK)**

(54) **METHOD FOR CONTROLLING AN AMMONIA PLANT USING RENEWABLE ENERGY**

(57) The present invention provides a novel control method to enable an ammonia plant to ramp anywhere between 5% and 100% hydrogen feed rates. The method comprises adjusting the temperature controller setpoint for the inlet gas to the first reactor catalyst bed (coldshot TC) and the controller tuning parameters for the feed hydrogen and nitrogen flows and the reactor loop pressure, all based on the hydrogen feed rate.

**Fig. 1**

EP 4 516 740 A1

**Description**

**Field of Application**

The present invention refers to a process for controlling the operation of an ammonia plant.

**Background Art**

The Haber process is well established in industry to produce ammonia. Ammonia plants are typically operated at steady state conditions with little to no change in feed rates. However, there is increasing emphasis on moving away from fossil fuels as the source of hydrogen for the ammonia production process.

A popular alternative approach is to generate the hydrogen required through electrolysis driven by renewable power. Unlike fossil fuels, renewable power will fluctuate, sometimes greatly, depending on the availability of wind and solar energy. For this reason, it is expected that the hydrogen production from renewable power will be extremely variable. This will affect the operation of the ammonia process, which will need to operate stably with variable feed rates.

To feed hydrogen obtained from electrolysis in the range from low load to a high load to an ammonia plant, several steps are typically involved.

First, the hydrogen gas is compressed and purified to remove any impurities that may be present. This is important to ensure that the hydrogen gas meets the quality standards required for use in the ammonia production process.

Next, the purified hydrogen gas is fed to the ammonia plant at the rate it is produced. In some cases, intermediate storage of hydrogen is preferred to partially decouple the operation of the hydrogen production with the ammonia synthesis. In the hydrogen storage, hydrogen is stored in high-pressure storage tanks until it is needed. The storage tanks can hold a large amount of hydrogen gas and provide a convenient way to transport the gas from the electrolysis plant to the ammonia plant. However, storage is a costly investment which should be avoided, or at least minimized.

When the ammonia plant requires hydrogen, the high-pressure hydrogen gas is fed from the storage tanks to the plant through pipelines. The gas is typically metered and controlled to ensure that the right amount of hydrogen is delivered to the plant.

Once the hydrogen gas reaches the ammonia plant, it is used as a feedstock to produce ammonia. The process of producing ammonia typically involves combining hydrogen gas with nitrogen gas in the presence of a catalyst under high pressure and temperature. This results in the production of ammonia gas, which is then processed and purified to remove any impurities before it is stored or transported for use in various applications.

EP381261 A1 discloses the control of an ammonia plant at partial load using a recycle around the recirculation compressor.

US9463983 B2 discloses the use of a stream comprising inerts to control reactor pressure for load regulation, by either increasing or decreasing the amount of inerts present.

US10995009 B2 discloses the use of energy storage to allow near continuous operation of an ammonia plant with variable renewable power generation.

EP3426601 B1 discloses the use of a bypass around the first reactor bed to adjust production dependent on power availability, by varying the flow through the bypass.

WO2021/060985 A1 discloses the use of a 3-way valve to control the amount of product ammonia drawn from the reactor loop dependent on renewable power availability. The majority of product is removed in operating mode 1 with a smaller recycle flow, and the majority of product is recycled in operating mode 2. No discussion of variability between the two modes.

WO2021/233780 A1 discloses the use of a loop pressure controller acting on either the recirculating compressor anti-surge valve or on a dedicated control valve in the reactor loop so that loop pressure can be maintained as available hydrogen decreases due to the variability of renewable power.

Morud (1998) *Analysis of Instability in an Industrial Ammonia Reactor* compares a dynamic model of an ammonia reactor with plant data during a temperature instability caused by a sudden reduction in reactor pressure.

The applicant hereby provides a control scheme different from the typical control scheme of the steady operating plant, to help overcome some of the above-mentioned issues with variable feed operation. This includes the addition of pressure control on the reactor loop amongst other modified control loops.

To control the pressure in the ammonia loop with variable hydrogen load, several methods can be used. Recently, use of renewable energy in the ammonia synthesis has become more available. As an example, a combination of electrolysis of water powered by renewable energy, such as wind power and solar energy for the production of hydrogen by electrolysis of water, and an air separation plant for the production of nitrogen, has been envisaged for the preparation of ammonia synthesis gas. The thus produced hydrogen and nitrogen are combined in stoichiometric ratios to form synthesis gas for ammonia production.

The problem when using renewable energy in the ammonia synthesis is that the supply of energy varies depending on the natural variations of, for instance, wind and sun. As a result, the flow of fresh ammonia synthesis gas produced by means of renewable energy can vary substantially.

Because of relatively low single pass conversion rates of ammonia synthesis gas in in the ammonia reactor caused by equilibrium limitations, a large loop recycle stream of unconverted synthesis gas is required in the loops.

To substitute converted hydrogen and nitrogen in the unconverted synthesis gas, a make-up gas of fresh ammonia synthesis gas must constantly be added into the loop recycle gas. In the case of large and frequent load variations because of the varying flow of fresh synthesis gas to the synthesis loop, the mechanical stress caused by pressure fluctuations introduced by the load variations will lead to mechanical stress conditions, not disclosed here in, that may cause mechanical failures of pressure bearing equipment. The temperature variations, however, will be limited.

Such operating conditions are especially relevant when the production is dependent on a variable flow of feedstock such as is the case for renewable ammonia production.

Traditionally an ammonia loop does not feature dedicated pressure control. In case of reduced feed flow to the loop, the loop pressure will drop. Thereby the conversion will reduce to a point eventually matching the make-up flow. In case of increasing feed flow, the pressure and the conversion will increase. Since the load of a traditional ammonia plant tends to be stable over long periods, the absence of a pressure control does not normally represent a problem.

For a given ammonia reactor/loop configuration a possible way to control the loop pressure is by varying the H/N ratio in the fresh ammonia synthesis gas. In some cases, it is also possible to vary the contents of inerts in the loop by reducing the purge flow, but this is seldom relevant for renewable ammonia production where the make-up gas is very low in inerts and it is undesirable to vent valuable renewable hydrogen. In practice, however, it is difficult to control loop pressure with this method.

The method described in WO2021/233780 makes use of the anti-surge control valve of a compressor and/or a compressor flow regulation valve for the recirculation of an ammonia loop recirculation gas at varying flow of fresh ammonia synthesis gas. As described therein, the amount of feed gas to the ammonia reactor can be controlled by the anti-surge controller of the recirculator (loop recycle compressor). The anti-surge or kickback valve is typically a fast-reacting control element for protection against surge resulting in vibrations and thus damage of the compressor.

In an ammonia plant, **static setpoints** refer to the fixed target values for various process parameters that are used to control the production of ammonia. These setpoints remain constant over a period and are entered into the plant's control system to ensure that the process operates within safe and efficient operating conditions. By using static setpoints, the ammonia plant can operate within safe and efficient operating conditions, ensuring the quality of the product and minimizing any negative impacts on the environment. Some common examples of static setpoints in an ammonia plant include:

a) The **temperature setpoints** for various stages of the ammonia synthesis process are set to maintain the optimal conditions for the reaction to occur. These setpoints are typically based on the specific reaction kinetics of the process;
b) The **pressure setpoints** for the different stages of the ammonia production process are set to maintain the required conditions for the reaction to occur. These setpoints are typically based on the specific pressure requirements of the process;
c) The **flowrate setpoints** for the different process streams, such as the feedstock and product streams, are set to maintain the optimal conditions for the reaction to occur. These setpoints are typically based on the specific flowrate requirements of the process;
d) The **composition setpoints** for the various process streams, such as the feedstock and product streams, are set to maintain the required ratios of the different components. These setpoints are typically based on the specific chemical requirements of the process.

In the present invention a **Feedback control** system is used to control the hydrogen flowrate in the ammonia loop set according to the available renewable hydrogen flowrate. Feedback control involves continuously monitoring a process variable, comparing it to a desired setpoint, and use the error, the difference between the process value and its setpoint, to adjust the control action to bring the process variable closer to the setpoint. PID (proportional-integral-derivative) control is one of the most common and well-known algorithms of feedback control, using the current error, historical error accumulation, and the rate of change of error to adjust the control output and regulate a process variable. The feedback mechanism in PID control ensures that the system continually adjusts its actions based on the discrepancy between the desired setpoint and the actual process variable.

**Cascade control** is used to control the ammonia loop with a variable hydrogen feed. The primary control loop controls the pressure to the ammonia reactor by sending a flow setpoint to the secondary control loop which controls the flow of synthesis gas recycled to the ammonia reactor.

**Feedforward control** is used to control the ammonia loop with a variable hydrogen feed. The feedforward controller calculates the required flow of synthesis gas recycled to the inlet of the ammonia reactor based on the measured feed flow.

**Ratio control** is used to control the ammonia loop with a variable hydrogen feed. The controller maintains a constant ratio of hydrogen to nitrogen in the ammonia synthesis process. The nitrogen flowrate is adjusted based on the hydrogen flowrate to give the required ratio in the loop.

**Controller tuning parameters** are the settings for the PID control algorithm, which determine how a controller operates. These parameters are used to adjust the behaviour of the controller to ensure that it can maintain the desired process conditions and improve the stability of the process. These controller tuning parameters are adjusted by the process control engineer to ensure the controller maintains the desired setpoint and meets the process requirements. The tuning process typically involves performing tests on the system to determine the best combination of tuning parameters to achieve optimal performance.

The main controller tuning parameters used in an ammonia plant are:

**Proportional Gain (Kp):** The proportional gain parameter determines the sensitivity of the controller output to the error signal. Increasing Kp can make the controller more responsive, but it can also make the control loop more unstable.

**Integral Gain (Ki):** The integral gain parameter determines how the controller responds to changes in the process over time. Increasing Ki can reduce steady-state errors but can also lead to overshoot and instability if set too high. Integral Time is the inverse of Integral Gain and is used in the Table 1 instead of Integral Gain.

**Derivative Gain (Kd):** The derivative gain parameter determines the controller response to changes in the rate of change of the process variable. Increasing Kd can improve the controller response to sudden changes in the process but can also lead to instability.

The present invention provides a novel control method to enable an ammonia plant to ramp anywhere between 5% and 100% hydrogen feed rates or load, preferably 3% per minute or faster, e.g. 5% per minute or faster.

The method comprises adjusting the temperature controller setpoint for the inlet gas to the reactor catalyst bed 1 (coldshot TC) and the controller tuning parameters for the feed hydrogen flow, the reactor loop $H_2/N_2$ ratio and the reactor loop pressure, all based on the hydrogen feed rate.

**Description of the Invention**

The present invention refers to a method, plant and computer implemented method to control the operation of an ammonia plant, preventing downtime and adjusting operation, e.g. to the availability and/or price of renewable energy.

The fast ramping up or down of feed rate to an ammonia plant, potentially results in several controllers becoming unstable because the PID controllers are typically tuned for conditions close to 100% capacity, and at lower production rates, say less than about 30%, a small disturbance in production causes a larger relative change in production.

Different controller tuning is required when operating at lower capacity. Therefore, to ensure that the control of the plant remains stable, these PID controllers need to have tuning parameters that vary with feed rate.

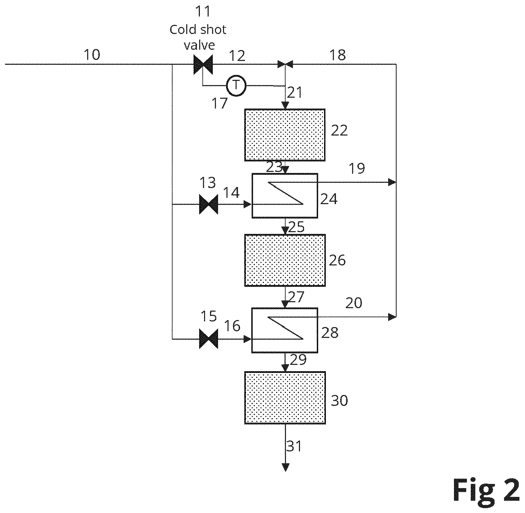

A typical configuration of an ammonia reactor is shown in Fig. 2 and contains 3 adiabatic catalytic beds with interstage cooling to maximize the production of ammonia, which is limited by chemical equilibrium. The inlet temperatures to the reactor catalyst beds are typically optimized to achieve the maximum production of ammonia with the minimum volume of catalyst. A lower inlet temperature allows a higher conversion of hydrogen and nitrogen to ammonia before further conversion is inhibited by chemical equilibrium. However, higher temperature favours a faster reaction rate so with lower inlet temperature, more catalyst volume is required to reach chemical equilibrium. Furthermore, if the ammonia reactor is operated with too low an inlet temperature or a too small catalyst volume when operating at a feed rate, there is a risk of loss of ignition in the ammonia reactor, because the heat generated by chemical reaction is less than the heat required for the heating of the feed gases. When ramping up an ammonia plant quickly from low to high feed rates, or load, of hydrogen, the reactor catalyst bed 1 exit temperature falls significantly further than where it had started at the beginning of the downward ramp from full load operation. The result of this sets up temperature oscillations through reactor catalyst beds 2 and 3. As the temperature profiles in the reactor catalyst beds move, the extent of reaction shifts, which in turn causes the loop pressure to move. The control system is unable to dampen these oscillations which grow increasingly worse with time until the entire loop control becomes unstable. Eventually, bed 3's discharge temperature drops low, an indication that the reaction is starting to shut down in the reactor. As the reaction shuts down, nitrogen and hydrogen accumulate in the loop which drives the loop pressure high, or the feed rate of hydrogen will have to be limited.

The first key difference in the novel control scheme disclosed is that controller tuning parameters for the hydrogen feed flow controller, reactor loop hydrogen / nitrogen ratio controller and the reactor loop pressure controller are adjusted based on the hydrogen feed flow. This means that as the hydrogen feed decreases the controller tuning parameters are constantly changing and at no point does the control scheme become unstable. The system dynamics change as the hydrogen feed rate changes. Those changes need to be reflected in the tuning parameters for the controllers to maintain the same level of performance at varying feed rates.

Additionally, the setpoint for the inlet temperature to reactor catalyst bed 1 is controlled by adjusting the flow going through the cold shot bypass. The setpoint of the cold shot temperature controller is increased as the hydrogen feed increases. This increases the temperature of reactor catalyst bed 1 inlet. The temperatures along the rest of the bed profile fall due to the increased gas throughput absorbing the heat of reaction. Similar behaviour is seen in reactor catalyst beds 2 and 3 and new temperature profiles are quickly established soon after the ramp is complete. Further detail is included in the figures and below examples.

The advantage of these modifications to the controller tuning parameters and setpoint is that the changes required are automatically calculated as the hydrogen flowrate varies and no action is required by the operator. They also maintain stable operation of the ammonia process across fast ramp rates and a wide feed rate range.

**Definitions**

**"Atmospheric pressure"** means 1.01325 bar, i.e., approximately 1 bar.

**"Reactor catalyst bed"** means the catalyst bed which enables the catalytic conversion (synthesis) of $N_2(g) + 3H_2(g) = 2NH_3(g) + Heat (Q)$. A reactor catalyst bed is a key component of an ammonia plant, where the ammonia synthesis takes place. The reactor catalyst bed is a vessel filled with a catalyst that converts the reactants, hydrogen and nitrogen, into ammonia. The reactor catalyst bed is designed to have a high surface area to maximize the exposure of the reactants to the catalyst. The reactor catalyst bed operates at high temperature and pressure, typically around 400-500°C and 100-200 bar. The reactants, hydrogen and nitrogen, are fed into the reactor catalyst bed at the appropriate ratio to ensure maximum conversion to ammonia. The reaction that takes place in the reactor catalyst bed is exothermic, which means it releases heat. This heat is removed from the reactor catalyst bed to maintain the desired operating temperature using a cooling system. The outlet gas from the reactor catalyst bed is cooled and the ammonia is separated from the unreacted hydrogen and nitrogen using a series of condensers and separators. The ammonia is then further purified and stored for use or shipment. Overall, the reactor catalyst bed is a critical component of an ammonia plant, where ammonia synthesis takes place. Its proper design, operation, and maintenance are essential for ensuring the efficient production of high-quality ammonia.

**"Cold shot TC"** or **"Cold shot bypass"** means cold shot temperature control, which is the control of the first reactor catalyst bed inlet temperature by means of cold gas (cold shot) bypassing the interbed heat exchangers in the ammonia reactor and mixing with heated gas from the interbed heat exchangers before the inlet of the first reactor catalyst bed.

A **"cold shot valve"** is the actual control valve used in the above mentioned cold shot temperature control loop.

**"Dynamic ammonia production"** means the ability of an ammonia plant to adjust its production rate in response to changes in demand or process conditions. In other words, it refers to the ability of the plant to operate at different production rates based on changing market conditions, customer demand, or other factors. Dynamic ammonia production typically involves adjusting the plant capacity and process conditions to accommodate the available feedstock flowrates or desired ammonia production rate. This can involve adjusting the temperature, pressure, and feed ratios in various parts of the plant, such as the reformer, shift reactor, and ammonia synthesis loop. In particular, it may refer to ammonia production which varies in load according to the availability of the renewable power.

**"Fractional Hydrogen Desired Rate"** means the desired hydrogen feed flow to the ammonia plant relative to the maximum capacity of the ammonia plant.

**"Hydrogen (demand) flow setpoint"** means the production of hydrogen in the upstream hydrogen production unit, that will include electrolysis, deoxo, drying, compression and optional hydrogen storage, and defines the plant load and hydrogen flow to be taken into the ammonia synthesis loop. The hydrogen flowrate is typically measured using flow meters or other instrumentation, and the data is fed back to the control system to ensure that the actual flowrate is in line with the setpoint. The control system then adjusts the flowrate as necessary to accommodate the actual hydrogen production rate in the hydrogen production unit. In some cases, it may be required to limit the hydrogen consumption due to requirements originating outside the ammonia loop and in those cases an external control can be employed to limit the hydrogen flow to the synthesis loop. However, the remainder of the system will work as described above.

**"Loop pressure controller"** means the operating pressure in the ammonia loop which is typically controlled at the ammonia reactor inlet or outlet by means of a PID control loop.

**"Ramp-up/-down of hydrogen"** means increasing/decreasing the flow of hydrogen entering the ammonia synthesis loop.

**"Renewable power or energy"** means power produced from renewable sources which in this context is mainly considered as wind and solar energy.

**"Setpoint of the cold shot temperature control loop"** means the desired inlet temperature to the first reactor catalyst bed. The specific setpoint for the cold shot temperature control loop is determined during the plant design phase and may be adjusted during operation based on the specific process conditions.

**"Temperature controller setpoint"** means the setpoint for the temperature PID controller to target.

**"Tuning parameters"** mean the tuning constants specified in the PID control loops, which depending on the form of PID algorithm are: proportional gain (Kp), integration reset time (Ti) and derivative time (Td).

## Example 1

An example of the present invention is illustrated by a dynamic ammonia plant configured for receiving hydrogen generated through electrolysis powered by renewable energy such as solar or wind power.

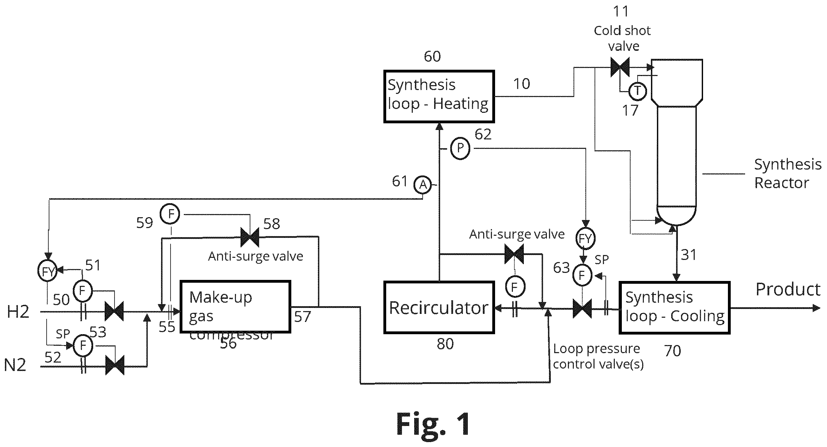

The ammonia plant is configured with an ammonia reactor containing 3 adiabatic reactor catalyst beds as shown in Figures 1 and 2. Figure 1 shows an ammonia synthesis loop and Figure 2 a synthesis reactor.

Hydrogen feed gas (50) is received from the hydrogen production unit. The flow of hydrogen is measured and controlled with the hydrogen feed flow control loop (51). Nitrogen (52) is added to Hydrogen in the ratio 1:3. The flow of nitrogen is controlled by a flow control loop (53), receiving a flow setpoint calculated by the measured flow of hydrogen feed, and with a correction from the actual measured (61) hydrogen to nitrogen ratio in the synthesis loop.

The combined make up gas is compressed in the make-up gas compressor (56). From there it is combined with recycle gas from (70) and sent to the recirculator compressor (80).

The synthesis loop pressure is controlled by loop pressure controller (62) which adjusts the flow of process gas circulated in the ammonia loop (63).

The combined synthesis gas is preheated in (60) before entering the ammonia synthesis reactor.

As shown in Figure 2 partially preheated synthesis gas (10) is split in three streams. One stream (16) is directed to the second interbed heat exchanger (IHE) (28) for cooling of the converted gas (27) leaving reactor catalyst bed 2 (26) going to bed 3 (30). A second stream (14) is directed to the first IHE (24) for cooling of the converted gas leaving reactor catalyst bed 1 (23). The third stream (12) is the cold shot, which bypasses the two IHE's and is used to control (17) the inlet temperature to the 1st reactor catalyst bed (21). The combined unconverted gas from the two IHE's and the cold shot is passed to reactor catalyst bed 1 (22), where the main part of the ammonia synthesis takes place. The partially converted gas (23) is then cooled in the first IHE (24) before entering reactor catalyst bed 2 (26) for further conversion. The further converted gas from reactor catalyst bed 2 is cooled in second IHE (28) before being passed on to final conversion in reactor catalyst bed 3 (30). In this configuration the hot gas leaving reactor catalyst bed 3 (31) leaves the ammonia reactor and goes to a gas cooling train configured with steam generating equipment such as a steam superheater, waste heat boiler and boiler feed water preheater. From the boiler feed water preheater, the gas goes to a series of gas/gas heat exchangers (hot and cold exchanger) exchanging heat with cold unconverted synthesis gas from the ammonia separator, water cooler and ammonia chillers before entering the ammonia separator, where the condensed ammonia is separated from synthesis gas.

The vapour from the ammonia separator, containing unconverted hydrogen and nitrogen plus some ammonia, is then sent to the recycle gas compressor and mixed with fresh incoming hydrogen and nitrogen gas coming from the make-up gas compressor. From there the combined recycle gas and makeup gas is preheated in cold and hot exchangers and leaving the hot exchanger as partially heated unconverted gas.

The liquid ammonia leaving the ammonia separator passes through process steps where it is relieved from dissolved gases before being discharged as liquid ammonia product.

The main control loops in the ammonia synthesis loop include:

- the hydrogen make-up gas flow controller (51),
- loop pressure controller (62), and
- the loop hydrogen to nitrogen ratio controller (61).

In this example these control loops are kept in automatic control with variable tuning parameters. Tuning parameters are provided in Table 1:

Table 1: Load based PID controller tuning parameters used in both examples.

| Controller | Kp (Gain) | $T_I$ (integral Time) [s] |
|---|---|---|
| Hydrogen feed (51) | 0.07* Fractional Hydrogen Desired Rate + 0.14*(1-Fractional Hydrogen Desired Rate) | = 24-7* Fractional Hydrogen Desired Rate |
| Loop H2/N2 ratio (61) | 10*(Fractional Hydrogen Desired Rate)^0.5 | 240 |

(continued)

| Controller | Kp (Gain) | $T_I$ (integral Time) [s] |
|---|---|---|
| Loop pressure (62) | 40*(Fractional Hydrogen Desired Rate)^0.5 | 120 |

A dynamic simulation model of an ammonia plant configured as described above has been used to test the design and operability of the ammonia plant at transient conditions.

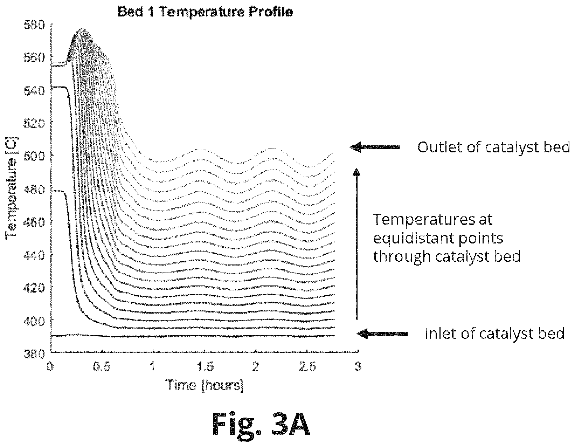

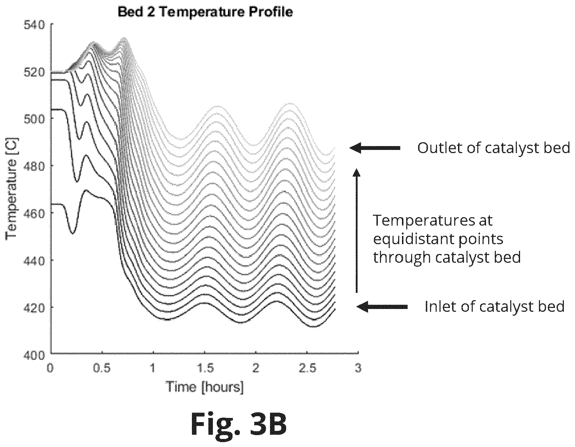

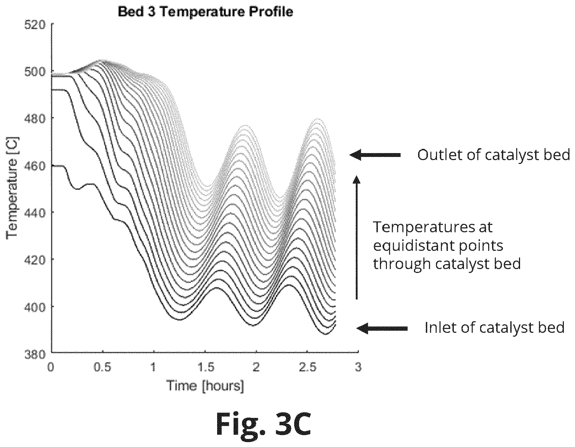

Figures 3A/B/C show the simulated reactor catalyst bed temperatures for 20 different positions in reactor catalyst bed 1, 2 and 3, respectively in a scenario where the hydrogen feed rate is ramped up from 10% to 100% at a rate of 3% / minute. The setpoint for the cold shot temperature controller (17) controlling the inlet temperature is fixed throughout the simulation. As can be seen in Fig. 3A temperature oscillations initiate upon completion of the ramp-up in hydrogen feed. These oscillations propagate through to reactor catalyst beds 2 and 3 where the oscillations grow and the bed temperatures trend downwards indicating that the reactions are slowing. Such temperature oscillations are not acceptable because they can lead to premature fatigue and mechanical failure of the ammonia reactor and other high-pressure equipment in the synthesis loop.

## Example 2

This example is similar to Example 1, except the setpoint for the cold shot temperature controller (17) controlling the inlet temperature to the reactor catalyst bed 1 is load dependent in this simulation. The actual temperature set point for the cold shot temperature control is calculated according to the equation:

$$TIC.SP = 389°C + 10°C*Fractional\ Hydrogen\ Desired\ Rate$$

Where TIC.SP is the set point for the cold shot temperature control loop.

This means that if the plant is operated at 10% load the set point for the cold shot temperature control loop is 390°C and at 100% load the set point for the cold shot temperature control is 399°C.

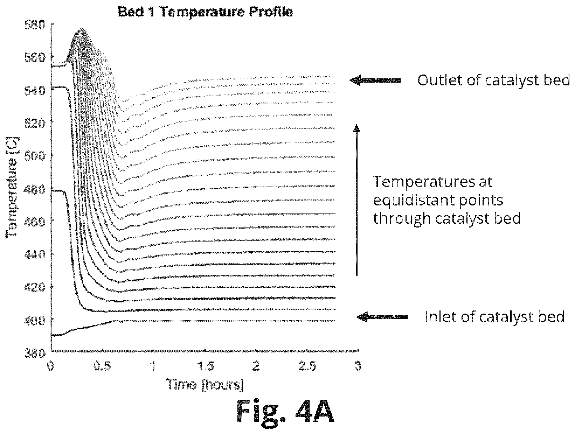

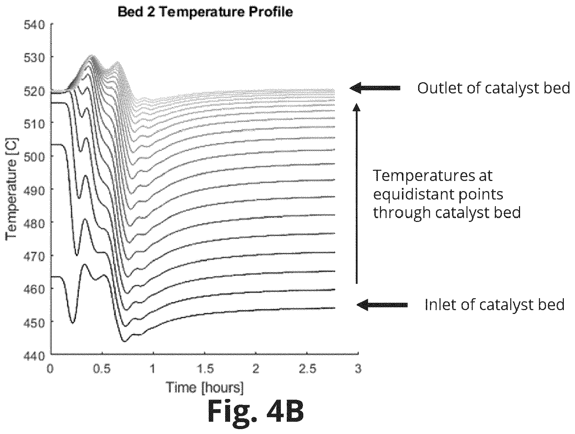

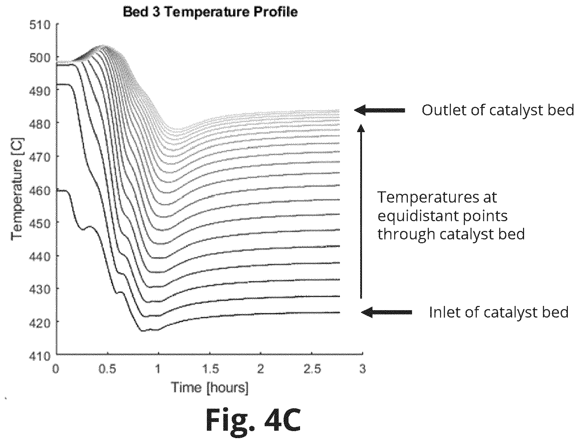

Figures 4A/B/C show the simulated reactor catalyst bed temperatures for 20 different positions in reactor catalyst bed 1, 2 and 3, respectively in a scenario where the hydrogen feed rate is ramped up from 10% to 100% at a rate of 3% minute.

As can be seen in Fig. 4A/B/C, the temperature oscillations found in Example 1 have now been eliminated and the temperatures quickly settle to new steady conditions.

## Claims

1. Method for controlling ammonia production with ramp-up or down of hydrogen feed flow, wherein varying controller tuning parameters as the plant is ramped are used to adjust the behaviour of controllers wherein:

   a) Compressed Hydrogen feed gas (50) is received from the hydrogen production unit;
   b) The flow of hydrogen is measured and controlled with the hydrogen feed flow control loop (51);
   c) Nitrogen (52) is added to hydrogen in the desired ratio;
   d) The combined make up gas is compressed in the make-up gas compressor (56) and then combined with recycle gas from (70) and sent to the recirculation compressor (80);
   e) The combined synthesis gas is preheated in (60) before entering the ammonia synthesis reactor;
   f) The ammonia synthesis reactor is configured with a minimum of two adiabatic catalytic reactor beds, with interbed cooling, and where partially preheated synthesis gas (10) is split into two or more streams where the first stream is the cold shot (12), which is controlled by cold shot temperature controller (17), and added to control the inlet temperature to reactor catalyst bed 1, the second stream (14) and optionally more (16) streams are further heated by cooling converted gas in the interbed or effluent gas heat exchangers (24, etc.) and the combined gas is feed to the inlet of a first reactor catalyst bed (22).
   g) The hot gas (31) leaves the ammonia reactor and,
   h) The resulting gas is cooled before entering the ammonia separator, where the condensed ammonia is separated from synthesis gas which is recycled and mixed with make-up gas in d),
   i) The liquid ammonia leaving the ammonia separator passes through process steps where dissolved gases are separated before the liquid ammonia is discharged as liquid ammonia product,

wherein the main control loops in the ammonia synthesis loop comprising:

- the hydrogen make-up gas flow controller (51),
- loop pressure controller (62), and
- the loop hydrogen to nitrogen ratio controller (61),

have load dependent controller tuning parameters and the setpoint for the cold shot temperature controller (17) controlling the inlet temperature to reactor catalyst bed 1 is load dependent.

2. Method according to claim 1 wherein in step c) the flow of nitrogen is controlled by a flow control loop (53), receiving a flow setpoint calculated by the measured flow of hydrogen feed, and with a correction from the actual measured (61) hydrogen to nitrogen ratio in the synthesis loop.

3. Method according to any one of claims 1 or 2 wherein in step c) nitrogen is added to hydrogen in the approximate ratio of 1:3.

4. Method according to any one of claims 1 to 3 wherein during step f) in an adiabatic three bed reactor:

(i) stream (16) is directed to a second IHE (28) for cooling of the converted gas (27) leaving the reactor catalyst bed 2 (26) and going to the reactor catalyst bed 3 (30);
(ii) stream (14) is directed to a first IHE (24) for cooling of the converted gas leaving reactor catalyst bed 1 (22);
(iii) stream (12) is the cold shot temperature controller, which is bypassing the two IHE's and the combined unconverted gas from the two IHE and the cold shot temperature controller is passed to reactor catalyst bed 1 (22), where the main part of the ammonia synthesis takes place;
(iv) the partially converted gas (23) is then cooled in the first IHE (24) before entering reactor catalyst bed 2 (26) for further conversion; and
(v) the further converted gas from reactor catalyst bed 2 is cooled in the second IHE (28) before being passed on to final conversion in reactor catalyst bed 3 (30).

5. Method according to any one of claims 1 to 4 wherein the hot gas coming out of the ammonia reactor (31) goes through a series of gas/gas heat exchangers exchanging heat with cold unconverted synthesis gas from the ammonia separator, water cooler and ammonia chillers.

6. Method according to any one of claims 1 to 5 where cold shot reactor catalyst bed 1 inlet temperature controller setpoint is increased with increasing hydrogen demand flow setpoint.

7. Method according to any one of claims 1 to 5 where cold shot reactor catalyst bed 1 inlet temperature controller setpoint is decreased with decreasing hydrogen demand flow setpoint.

8. Method according to any one of claims 1 to 7, wherein hydrogen is ramped-up or ramped-down within the range of 5% to 100% of load.

9. Method according to claim 8 where the ramping rate is approximately faster than 1% per minute.

10. Method according to any one of the previous claims wherein the setpoint for the cold shot temperature controller (17) controlling the inlet temperature to reactor catalyst bed 1 is load dependent and is calculated according to the equation TIC.SP = A°C + B°C*Fractional Hydrogen Desired Rate, where A is approximately the cold shot temperature at minimum production and B is the temperature increase between minimum and maximum production.

11. Method according to any one of the previous claims wherein the synthesis loop pressure is controlled by loop pressure controller (62).

12. Ammonia plant controlled by a method according to claims 1 to 11, said plant being configured for receiving variable hydrogen flows, wherein the ammonia loop pressure is controlled by a pressure controller (62) and wherein an adiabatic ammonia reactor comprises at least two adiabatic reactor catalyst beds preceded by a cold shot valve, such that the hot gas leaving the final reactor catalyst bed (31) leaves said ammonia reactor and goes into a gas cooling train comprising a steam superheater, waste heat boiler and boiler feed water preheater.

13. Ammonia plant according to claim 12 wherein said variable hydrogen flows are generated through electrolysis powered by renewable energy.

14. Ammonia plant according to any one of claims 12 or 13, wherein said adiabatic ammonia reactor comprises three adiabatic reactor catalyst beds.

15. Ammonia plant according to any one of claims 12 to 14 wherein said loop pressure controller (62) is an anti-surge control valve of a compressor and/or a compressor flow regulation valve for the recirculation of an ammonia loop recirculation gas at varying flow of fresh ammonia synthesis gas.

16. Computer implemented method to dynamically operate the method of claims 1 to 11 in a plant according to claims 12-15-14, wherein the PID tuning parameters and variable controller setpoints are automatically calculated within the ammonia plants Distributed Control System (DCS).

**Fig. 1**

11
Cold shot
valve
10
12
18
17
T
21
22
23
19
13
14
24
25
26
27
20
15
16
28
29
30
31

**Fig 2**

**Bed 1 Temperature Profile**

Outlet of catalyst bed

Temperatures at equidistant points through catalyst bed

Inlet of catalyst bed

**Fig. 3A**

**Fig. 3B**

EP 4 516 740 A1

Fig. 3C

Bed 1 Temperature Profile

Outlet of catalyst bed

Temperatures at equidistant points through catalyst bed

Inlet of catalyst bed

Temperature [C]

Time [hours]

**Fig. 4A**

Fig. 4B

Fig. 4C

Europäisches
Patentamt

European
Patent Office

Office européen
des brevets

# EUROPEAN SEARCH REPORT

**Application Number**

**EP 23 19 5046**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 3 426 601 B1 (THYSSENKRUPP IND SOLUTIONS AG [DE]; THYSSENKRUPP AG [DE]) 6 May 2020 (2020-05-06) * claims 1,5-7,9, 12 * * abstract * * paragraphs [0003], [0006], [0009], [0129] * | 1-16 | INV. C01C1/04 |
| A,D | WO 2021/060985 A1 (UNIV DELFT TECH [NL]) 1 April 2021 (2021-04-01) * abstract * * figure 1 * * claims 1,9,10 * | 1-16 | |
| A | US 4 264 566 A (GILES RICHARD F ET AL) 28 April 1981 (1981-04-28) * abstract * * figures 1,2 * | 1-16 | |
| A | RU 2 497 754 C2 (UNGAR GERT [DE]; UNGAR JURG DITER [DE]) 10 November 2013 (2013-11-10) * abstract * * figure 1 * | 1-16 | TECHNICAL FIELDS SEARCHED (IPC) C01C |
| A | US 4 341 737 A (ALBANO JOHN V ET AL) 27 July 1982 (1982-07-27) * abstract * * figure 1 * * column 4, lines 36-59 * | 1-16 | |

The present search report has been drawn up for all claims

| Place of search | Date of completion of the search | Examiner |
|---|---|---|
| Munich | 23 February 2024 | Alvarez Rodriguez, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 19 5046

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2024

| Patent document cited in search report | | Publication date | Patent family member(s) | | Publication date |
|---|---|---|---|---|---|
| EP 3426601 | B1 | 06-05-2020 | DE | 102016203753 A1 | 14-09-2017 |
| | | | DK | 3426601 T3 | 20-07-2020 |
| | | | EP | 3426601 A1 | 16-01-2019 |
| | | | WO | 2017153304 A1 | 14-09-2017 |
| WO 2021060985 | A1 | 01-04-2021 | AU | 2020352749 A1 | 14-04-2022 |
| | | | EP | 4034503 A1 | 03-08-2022 |
| | | | JP | 2022552632 A | 19-12-2022 |
| | | | NL | 2023912 B1 | 27-05-2021 |
| | | | US | 2022371905 A1 | 24-11-2022 |
| | | | WO | 2021060985 A1 | 01-04-2021 |
| US 4264566 | A | 28-04-1981 | NONE | | |
| RU 2497754 | C2 | 10-11-2013 | CA | 2787861 A1 | 05-08-2010 |
| | | | CN | 102300812 A | 28-12-2011 |
| | | | EP | 2391582 A1 | 07-12-2011 |
| | | | RU | 2011135612 A | 10-03-2013 |
| | | | US | 2011293502 A1 | 01-12-2011 |
| | | | WO | 2010085926 A1 | 05-08-2010 |
| US 4341737 | A | 27-07-1982 | AU | 532977 B2 | 20-10-1983 |
| | | | CA | 1121987 A | 20-04-1982 |
| | | | DE | 3019625 A1 | 27-11-1980 |
| | | | FR | 2457124 A1 | 19-12-1980 |
| | | | GB | 2053017 A | 04-02-1981 |
| | | | IN | 154372 B | 20-10-1984 |
| | | | IT | 1140966 B | 10-10-1986 |
| | | | JP | S562841 A | 13-01-1981 |
| | | | NL | 8002943 A | 25-11-1980 |
| | | | US | 4341737 A | 27-07-1982 |

EPO FORM P0459

For more details about this annex : see Official Journal of the European Patent Office, No. 12/82

## REFERENCES CITED IN THE DESCRIPTION

**Patent documents cited in the description**

- EP 381261 A1
- US 9463983 B2
- US 10995009 B2
- EP 3426601 B1
- WO 2021060985 A1
- WO 2021233780 A1
- WO 2021233780 A